Europäisches Patentamt

European Patent Office

Office européen des brevets

(11) Publication number: **0 095 014**
**A1**

## EUROPEAN PATENT APPLICATION

(21) Application number: **83101776.9**

(22) Date of filing: **23.02.83**

(51) Int. Cl.³: **A 47 J 37/01**
**F 24 B 1/00**

(30) Priority: **21.05.82 GB 8214962**

(43) Date of publication of application:
**30.11.83 Bulletin 83/48**

(84) Designated Contracting States:
**AT BE CH DE FR GB IT LI LU NL SE**

(71) Applicant: **Scott, Charles**
**169 Mill Street**
**Brierley Hill West Midlands(GB)**

(72) Inventor: **Scott, Charles**
**169 Mill Street**
**Brierley Hill West Midlands(GB)**

(74) Representative: **Lally, William et al,**
**FORRESTER & BOEHMERT Widenmayerstrasse 4/I**
**D-8000 Munchen 22(DE)**

(54) Improvements relating to cooking utensils.

(57) A cooking utensil comprises a base member (6) defining an upwardly-open cavity defining a heating chamber (17), an aperture (18) being provided in the bottom (14) of the base member, through which aperture (18) heat flows into the heating chamber from a heat source over which the utensil may be positioned. Mounted within the heating chamber (17) is a cooking dish (8), into which food to be cooked may be placed. The cooking dish is spaced from the bottom (14) and from side walls (12) of the base, and a cover (10) may be placed over the cooking dish to provide, in conjunction therewith, a cooking chamber (40). Heat flows from the heating chamber through apertures (32) in a rim (28) of the cooking dish (8) into the cooking chamber (40), to provide for a uniform heating of the chamber (40). The utensil may be used in dry roasting, frying, steaming or baking, boiling or in combinations thereof.

./...

FIG 2

Title: Improvements relating to cooking utensils.

Description of Invention

This invention is concerned with improvements relating to cooking utensils, of the kind as are used to cook food over a source of heat.

According to the present invention there is provided a cooking utensil comprising a base member adapted to be positioned over a source of heat (which may be an electrically-powered element, or a gas- or liquid- burning device, or any other conventional or convenient source of heat), the base member providing an upwardly- open cavity defining a heating chamber into which heat flows from the source through one or more apertures in the bottom of the base member, and a cooking dish adapted to be mounted on the base member so as to extend at least in part into the heating chamber.

In this manner, heat from the heat source may be caused to flow into, and retained within, the heating chamber more reliably, providing a greater economy of use of the heat delivered by the source.

Preferably the base member is provided with a central aperture which is constructed and arranged so as to enable the heat source to extend at least in part through said aperture. Alternatively the base member may be adapted to be mounted on a heat source or on a supporting member extending around the heat source.

Preferably the cooking dish is in the form of a dish or pan, proving an upwardly-open cavity into which food to be cooked may be placed, and preferably is adapted to be mounted on the base member in a manner such that the bottom of the cooking member is spaced from the bottom of the base member, and the side wall of the cooking member is spaced from the side wall of the base member. In this manner heat entering the heating chamber through said aperture or apertures will flow over the bottom of the cooking member and around the side wall thereof, heating the cooking member relatively uniformly, and permitting a greater efficiency in the utilisation of the heat delivered by the heat source.

Additionally such construction minimises the tendency for the formation of "hot spots", increasing the safety of use of the utensil.

Preferably the cooking utensil comprises a cover member adapted to be mounted over the cooking dish, to define, in conjunction therewith, a cooking chamber. The use of such a cover member is effective to retain the heat conducted through the bottom and side walls of the cooking member over and around the food being cooked on the cooking member.

Preferably the cooking utensil comprises one or more dividing members, to divide the cooking chamber horizontally and/or vertically, to enable two or more different foods to be cooked simultaneously in the cooking chamber, or different foods to be subjected to different cooking conditions.

Preferably one or more apertures are provided in the cooking dish, through which heat may flow from the heating chamber into the cooking chamber. Conveniently a plurality of such apertures are provided, effecting a relatively dispersed entry of such heat into the cooking chamber. Preferably such apertures are provided in an upper part of the cooking dish, conveniently in a rim thereof, such as that upon which the cover member is in use positioned and inwardly of the cover member.

There will now be given a detailed description, to be read with reference to the accompanying drawings, of a cooking utensil which is a preferred embodiment of this invention, and which has been selected for the purposes of illustrating the invention by way of example.

In the accompanying drawings:

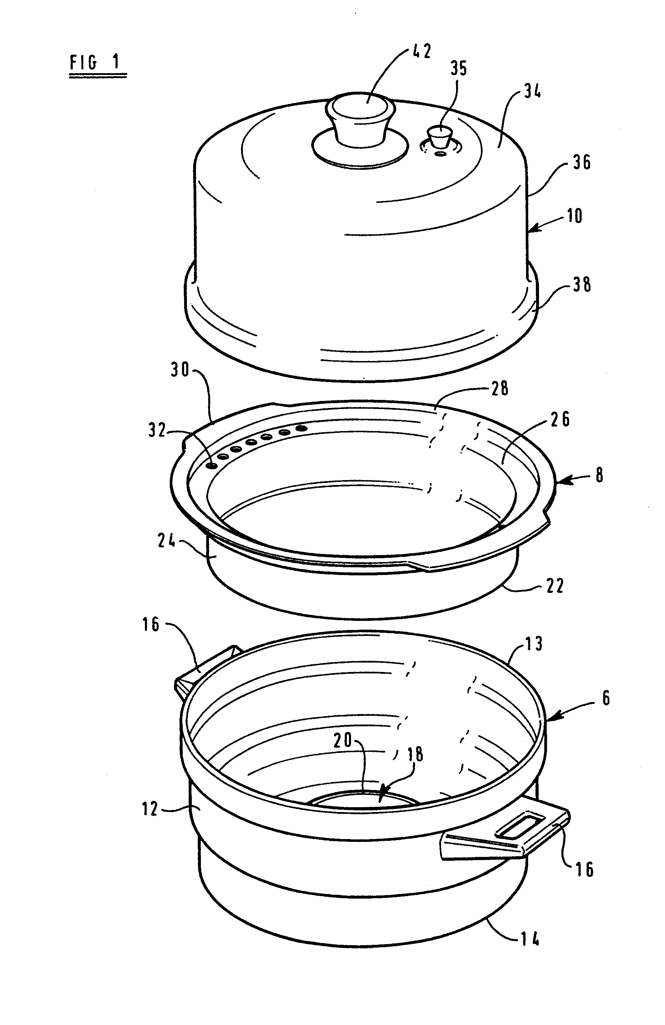

FIGURE 1 is a perspective view showing elements of the preferred embodiment in separated positions; and

FIGURE 2 is a vertical sectional view of the preferred embodiment, showing the elements thereof in assembled relationship.

The cooking utensil which is the preferred embodiment of this invention comprises a base member 6, a cooking dish 8, and a cover 10.

The base member 6 comprises a generally circular bottom 14, and a peripheral side wall 12 extending upwardly from the bottom. Extending through the bottom 14 is a central circular recess 18 bounded by an upwardly-extending rim 20, and the peripheral side wall 12 is stepped outwardly in the upward direction. Extending outwardly from a central section of the peripheral wall 12 are two handles 16.

The cooking dish 8 also comprises a generally circular bottom 22, smaller in diameter than that of the bottom 14 of the base member 6, and a circular peripheral side wall 24. Extending upwardly from the side wall 24 is an outwardly-stepped margin 26, which extends to a rim 28, provided with two, generally diametrically opposite, flanges 30. Extending through the horizontal section of the margin 26 are two groups of relatively small apertures 32.

The cooking utensil which is the preferred embodiment of this invention is intended for use with a source of heat such as a gas ring 48, the utensil being positioned on a support 50 extending around the gas ring with the gas ring beneath the aperture 18. However other heat sources may be used, such as a parafin burner or an electrically-powered heating element. When the base member 6 is placed over such source of heat, heat from the source will pass through the central recess 18 into a heating chamber 17 defined by the base member. Additionally of course some heat may flow around the outside of the base member 6.

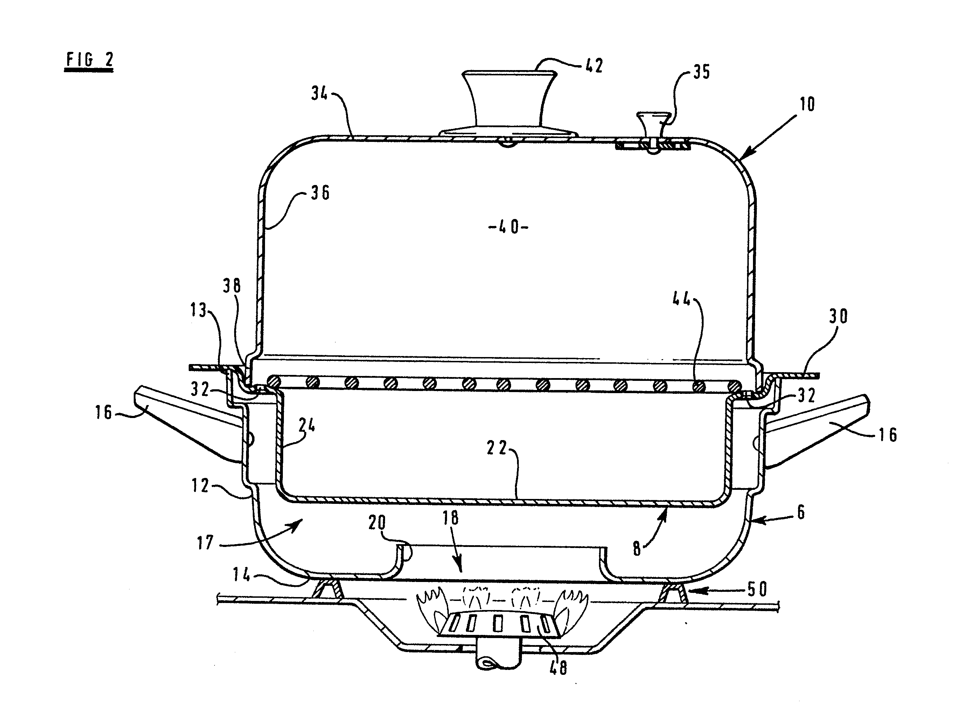

The relative size of the cooking dish 8 in relation to that of the base member 6 is such that the cooking dish may be placed over the base member, with the rim 28 resting on the top edge 13 of the side wall 12, with the majority part of the cooking dish extending into the heating chamber 17 (see Figure 2).

The cover 10 comprises a generally circular part 34, in which desirably a variable vent 35 is provided, a peripheral side wall 36, and a lower circular rim 38. The diameter of the rim 38 is such that the cover may be positioned on the horizontal part of the margin 26 of the cooking dish, extending around the outside of the two arrays of apertures 32, as is shown in Figure 2. In this position of the cover member, the cover member and cooking dish together define a cooking chamber 40.

In the use of the cooking utensil which is the preferred embodiment of this invention, heat from the source thereof tends primarily to flow through the central recess 18 into the heating chamber 17, permitting a more efficient use of the heat provided by the source, thereby permitting a lower setting to be used. Additionally by virtue of the disposition of the cooking dish within the heating chamber, heat flowing through the central recess 18 will flow over the bottom 22 of the cooking dish and around the peripheral side wall 24 thereof, producing a more uniform heating of the cooking dish. Such heat will flow through the apertures 32 in the cooking dish, and into the cooking chamber 40, providing for heating of the space immediately above the cooking dish.

If desired the cooking dish may comprise dividing members, to divide the cooking chamber 40 horizontally and/or vertically, to enable different foods to be cooked simultaneously, or to enable foods to be cooked in different manners.

- 4 -

For example a horizontal dividing member in the form of a grid 44 (shown in Figure 2) may be positioned over the cooking dish 8, enabling one food to be cooked in liquid within the cooking dish, and one or more other foods to be cooked by (for example) steaming in the part of the cooking chamber 40 above the grid 44.

Thus, the cooking utensil which is the preferred embodiment of this invention may be utilised in dry roasting, frying, steaming or baking, boiling, or in combinations thereof. Faster and/or more economical cooking may be obtained, with a lower heat input, and the reduction in the tendency for hot spots to be formed in the cooking dish provides a significant safety feature.

A uniform temperature within the cooking chamber 40 may be obtained, improving the quality of the cooking.

The flanges 30 of the cooking dish may be utilised to lift the cooking dish from the base member, and to enable liquid to be poured from the cooking dish, and the cover 10, which conveniently is of heat-resistant transparent material, is preferably provided with a knob 42 to enable it to be lifted from the cooking dish.

Thus, the present invention provides a cooking utensil which is versatile, efficient in its utilisation of heat and reliable. By virtue of its construction, it is convenient and completely safe to use, and is particularly suitable for use by disabled or blind persons.

0095014

CLAIMS:

1. A cooking utensil comprising a base member (6) adapted to be positioned over a source (48) of heat, the base member providing an upwardly- open cavity defining a heating chamber (17) into which heat flows from the source (48) through one or more apertures (18) in the bottom of the base member, and a cooking dish adapted to be mounted on the base member so as to extend at least in part into the heating chamber.

2. A cooking utensil according to Claim 1 wherein the base member is provided with a central aperture (18) which is constructed and arranged so as to enable the heat source (48) to extend at least in part through said aperture.

3. A cooking utensil according to Claim 2 wherein the base member is adapted to be mounted on the heat source, or on a supporting member (50) extending around the heat source (48).

4. A cooking utensil according to any one of the preceding claims wherein the cooking dish (8) is adapted to be mounted on the base member (6) in a manner such that the bottom of the cooking member is spaced from the bottom of the base member, and the side wall of the cooking member is spaced from the side wall of the base member.

5. A cooking utensil according to any one of the preceding claims comprising a cover (10) adapted to be mounted over the cooking dish (8), to define, in conjunction therewith, a cooking chamber.

6. A cooking utensil according to any one of the preceding claims comprising one or more dividing members (44) to divide the cooking chamber horizontally and/or vertically.

7. A cooking utensil according to any one of the preceding claims wherein one or more apertures (32) are provided in the cooking dish (8), through which heat may flow from the heating chamber (17) into the cooking chamber (40).

8.    A cooking utensil according to Claim 7 wherein a plurality of such apertures (32) are provided.

9.    A cooking utensil according to one of Claims 8 and 9 wherein the or said apertures (32) are provided in a rim (28) of the cooking dish, upon which rim the cover member is in use positioned, said apertures being located inwardly of the cover member.

10.   Any novel feature or novel combination of features disclosed herein and/or shown in the accompanying drawings.

FIG 1

FIG 2

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 286 297 (DREHMANN) * Whole document * | 1-10 | A 47 J 37/01 F 24 B 1/00 |
| X | GB-A- 255 844 (ECKHARDT) * Whole document * | 1-10 | |
| X | DE-C- 560 111 (MONETA) * Whole document * | 1-10 | |
| X | DE-C- 850 663 (RITTER) * Whole document * | 1-10 | |
| X | CH-A- 130 603 (HAGER-POLLI) * Whole document * | 1-10 | |

TECHNICAL FIELDS SEARCHED (Int. Cl. ³)

A 47 J
F 24 B

The present search report has been drawn up for all claims

| Place of search | Date of completion of the search | Examiner |
|---|---|---|
| THE HAGUE | 17-08-1983 | SCHARTZ J. |